(19) Europäisches Patentamt
European Patent Office
Office européen des brevets

(11) Publication number: **0 315 702 B1**

(12) # EUROPEAN PATENT SPECIFICATION

(45) Date of publication of patent specification: **06.10.93**

(51) Int. Cl.⁵: **C09D 5/02**, C09D 161/20, C09D 163/00, C09D 167/00, C09D 133/08

(21) Application number: **88904652.0**

(22) Date of filing: **27.05.88**

(86) International application number: **PCT/JP88/00524**

(87) International publication number: **WO 88/09358 (01.12.88 88/26)**

(54) **THERMOSETTING WATER PAINT COMPOSITION.**

(30) Priority: **27.05.87 JP 130676/87**

(43) Date of publication of application: **17.05.89 Bulletin 89/20**

(45) Publication of the grant of the patent: **06.10.93 Bulletin 93/40**

(84) Designated Contracting States: **DE GB**

(56) References cited:
**FR-A- 2 510 131**
**FR-A- 2 526 801**

(73) Proprietor: **NIPPON PAINT CO., LTD.**
**1-2, Oyodokita 2-chome**
**Oyodo-ku**
**Osaka-shi Osaka-fu(JP)**

(72) Inventor: **NODA, Hideyoshi**
**Nippon Paint Co., Ltd.**
**19-17, Ikedanakamachi Neyagawa-shi**
**Osaka(JP)**
Inventor: **YOSHIKAWA, Motoyoshi**
**Nippon Paint Co., Ltd.**
**19-17, Ikedanakamachi Neyagawa-shi**
**Osaka(JP)**
Inventor: **KONISHI, Sakuichi**
**Nippon Paint Co., Ltd.**
**19-17, Ikedanakamachi Neyagawa-shi**
**Osaka(JP)**

(74) Representative: **Smulders, Theodorus A.H.J., Ir. et al**
**Vereenigde Octrooibureaux**
**Nieuwe Parklaan 97**
**NL-2587 BN 's-Gravenhage (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.6/3.3.1)

## Description

Field of invention

The present invention relates to an aqueous coating composition and more specifically, a resin dispersion type aqueous coating composition which is excellent in coating workability, capable of resulting a coating with excellent gloss and smoothness and hence in specifically useful as a top coat for automobile bodies and the like.

Background of the invention

An aqueous coating composition comprising hydrophobic resin particles uniformly dispersed in a system comprising water and an aqueous resin is being watched with keen interest in those respects of prevention of pollutuion and fire, economy of expensive, hazardous organic solvent and capability of forming various combination of resins, thereby exhibiting characteristic properties of the respective constituting resinous member. However, such an aqueous coating composition has, in general, the problem of poor pinhole resistance, because of its characteristic properties toward water. To cope with the same, a low reactive aminoplast resin as melamine resin is customarily used together and however, at that time, there results an additional question such that a cured coating having desired weather resistance can hardly be obtained after baking. In order to look to coexistence of pinhole resistance and weather resistance, a catalyst is ofter used together with a resinous composition which is comparatively low reactive at the initial stage of baking, to increase the reactivity of the composition after elapsing said initial stage baking. However, heretofore proposed catalysts as, for example, sodium p-toluene sulfonate, and a compound of the formula:

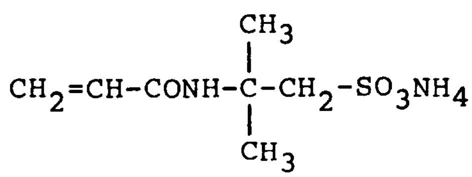

are not of fully satisfaction because viscosity of coating is only increased proportionally with the increase in baking time and no effective control of pinhole resistance can be attained therewith.

Under the circumstances, should a resinous-particle-dispersion type coating composition be obtained in the form of aqueous coating composition which is essentially composed of water, an aqueous resin, a hydrophobic resin and a hardening agent, those resins being selectable from variant species, and which includes a catalyst capable of resulting a well-cured coating without lowering the desired pinhole resistance while maintaining the excellent sagging resistance, it might be useful as a top coat and an intermediate coat for automobile bodies, electric appliances and the like. It is, therefore, an object of the invention to provide such coating composition.

Disclosure of the invention

According to the invention, the abovementioned object can be attained with a thermosetting type aqueous coating composition consisting essentially of

(A) water medium,

(B) an aqueous resin having a surface tension in 1 wt% deionized water solution of 51 dyne/cm or less and a water tolerance of 4 or more,

(C) hydrophobic resin in powder form or in the form of liquid droplets

(D) a hardening agent, and

(E) a compound represented by the formula(I):

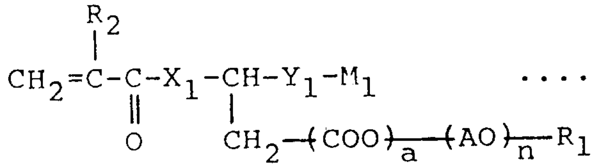

.....(I)

wherein $R_1$ is a substituted or unsubstituted hydrocarbon group; a phenyl group, an amino group or a carboxylic acid residue; $R_2$ is hydrogen atom or methyl group; A is an alkylene having 2 to 4 carbon atoms; n is an integer of 0~100; $X_1$ is -CONH- group or

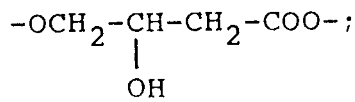

$Y_1$ is a carboxylic acid residue or a sulfonic acid residue; $M_1$ may form a salt with $Y_1$ and represents a mono- or bi-valent cation, ammonium ion or a lower amine; and a is 0 or 1, or by the formula (II)

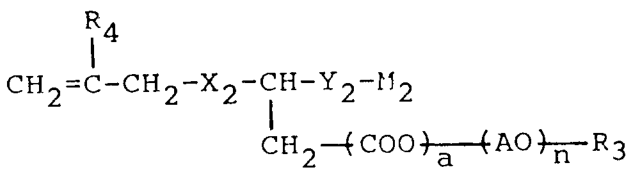

.....(II)

wherein $R_3$ is a substituted or unsubstituted hydrocarbon group, a phenyl group, an amino group or a carboxylic acid residue; $R_4$ is hydrogen atom or methyl group; A is an alkylene group having 2 to 4 carbon atoms; n is an integer of 0~100; $X_2$ is -CONH-, -COO- or

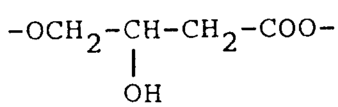

group; Y is a carboxylic acid residue or a sulfonic acid residue; $M_2$ may form a salt with $Y_2$ and represents a mono- or bi-valent cation, ammonium ion or a lower amine; a is 0 or 1,
as a hardening catalyst in an amount of 0.1~10 weight % of the total solid.

Best mode of practice of the invention

The aqueous resins to be used in the present invention are any of the members customarily used in this type of coating compositions and may be of anionic, cationic, amphoionic or nonionic type. Particularly preferable members are water soluble or water dispersible alkyd, polyester, epoxy, urethane, aminoplast or maleinized oil series resins each characterized by the hereinunder defined water tolerance and surface tension of aqueous solution thereof. That is, such resin should have a surface tension of 1wt% aqueous resin solution of 51dyne/cm or less, and a water tolerance of 4 or more, the water tolerance being expressed in terms of water dilution factor with respect to the stage at which 5g of a regular aqueous varnish used in the preparation of coating composition are in a 100ml beaker, at the stage, following progressive dilution with deionized water, when No. 1 type can no longer be correctly read through the beaker.
If the above-defined water-tolerance is less than 4, there is a tendency that when such resin is added with an insoluble resin, viscosity of the resulted composition is increased and dispersion stability is spoiled. At the time when the surface tension is more than 51dyne/cm, the similar tendencies of increase in viscosity and decrease in dispersion stability are observed. In using the abovementioned aqueous resin, it is first neutralized with an appropriate compound, cf. basic compound in case of anionic resin as acrylic resin,

alkyd resin or the like and acidic compound in case of cationic resin, to convert the resin to its water soluble or dispersible form, and then dissolved or dispersed in water.

When an anionic resin is to be selected as the aqueous resin, differing from the invention of Japanese Patent Publication (unexamined) 164145/57, excellent dispersing and dissolving properties can be expected with the resin having a resinous acid value of 30~200, preferably 30~100, which is a common resinous acid value range, and when a cationic resin is to be selected, advantageous similar effects can be expected with the resin having 30~300mmol nitrogen atoms per 100g resin solid.

In the present invention, to the system comprising the abovementioned aqueous resin and water medium, were dispersed and contained hydrophobic resin in powder form or in the form of liquid droplets. At that time, the hydrophobic resin may be of any resins customarily used in coating compositions. They may be liquid or solid water insoluble resins as, for example, acrylic resin, alkyd resin, polyester resin, epoxy resin, aminoplast resin, acryl-modified alkyd resin, acryl-modified polyester resin and the like.

The hardening agent as used in the present invention may be of any kinds customarily used in this type of thermosetting aqueous coating compositions, as, for example, aminoplast, blocked isocyanate, epoxy compound, phenolplast and the like. Typical examples of said aminoplast are hexamethoxy methylol melamine, methyl-butylated melamine and the like.

In this invention, the following compounds are additionally used as a catalyst.

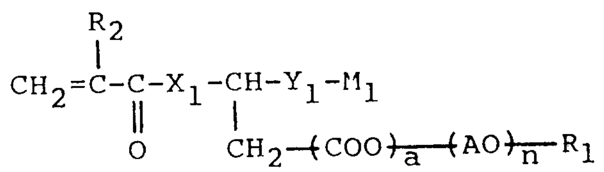

.....(I)

(in which $R_1$ is a hydrocarbon radical which may have a substituent, phenyl group, amino group or carboxylic acid residue; $R_2$ is a hydrogen atom or methyl group; A is an alkylene having 2 to 4 carbons; n is an integer of 0~100; $X_1$ is -CONH group or

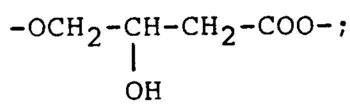

$Y_1$ is a carboxylic acid residue or sulfonic acid residue; $M_1$ forms a salt with $Y_1$ and is monovalent or bivalent cation, ammonium ion or a lower amine; a is 0 or 1), or

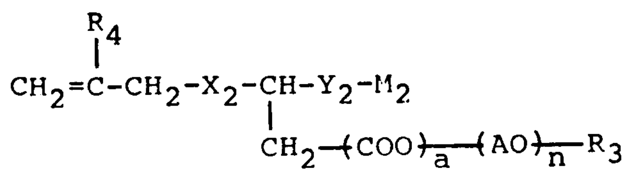

.....(II)

(in which $R_3$ is a hydrocarbon radical which may have a substituent, phenyl group, amino group or carboxylic acid residue; $R_4$ is hydrogen atom or methyl group; A is an alkylene having 2~4 carbons; n is an integer of 0~100; $X_2$ is -CONH group, -COO group or

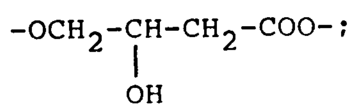

$Y_2$ is a carboxylic acid residue or sulfonic acid residue; $M_2$ forms a salt with $Y_2$ and is monovalent or bivalent cation, ammonium ion or a lower amine; a is 0 or 1). Among the compounds of said formula (I) and formula (II), preferable members are the compounds wherein n is 0~2 and $R_1$ and $R_3$ are hydrocarbon groups, especially lauryl, myristyl, oleyl and stearyl group.

Particularly preferable members are sulfosuccinic acid diester salts of the formula (VIII)

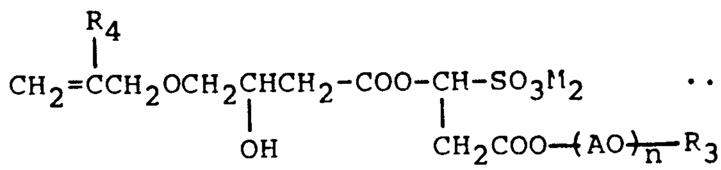

.....(VIII)

which are included in the compounds of said formula (II) wherein $X_2$ is

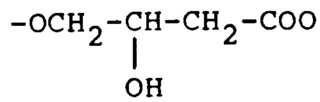

and Y is a sulfonic acid residue,
and in which $R_3$, $R_4$, A, n and $M_2$ each has the same meaning as defined hereinabove in connection with the compounds of the formula (II).

The use amount of the abovementioned compound should be 0.1~10% by weight of the total solid and preferably 1~6%. If it is less than 1%, there results, unless otherwise being used with other hardening system, a deficient hardening, and if it is more than 10%, there results a poor water resistance. Both are undesired.

Such sulfosuccinic acid diester salts may be, as stated in Japanese Patent Publication (unexamined) 203960/58, prepared as follows.

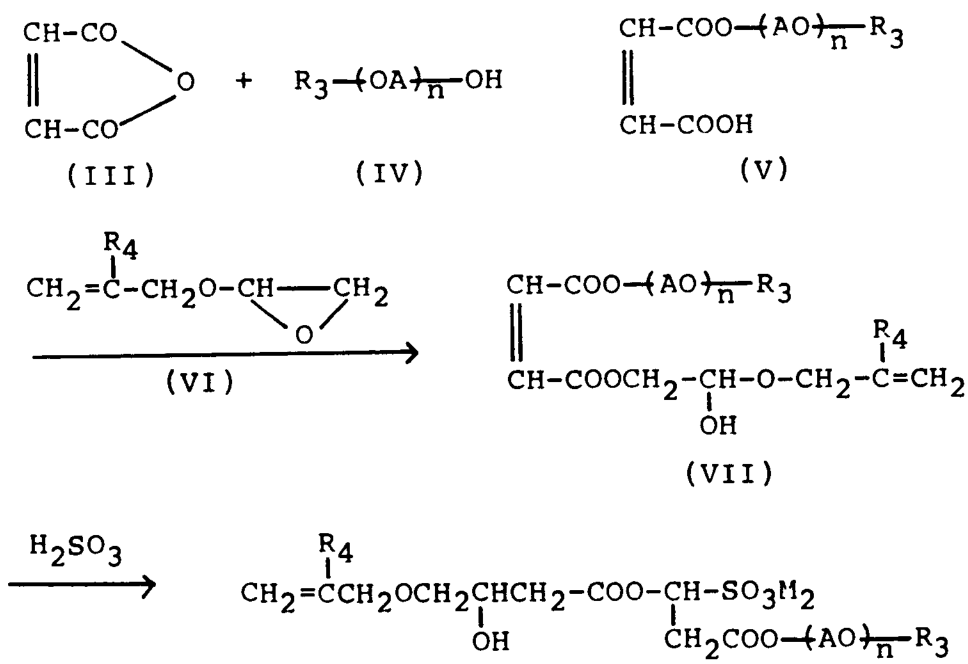


(III) (IV) (V) (VI) (VII) (VIII)

Examples of $R_3$ in the half esters of the formula (V) are hydrocarbon radical as, for example, alkyl group, alkenyl group (allyl, methallyl, oleyl group and the like), cycloalkyl group, aryl group, alkylaryl group and the like; hydrocarbon radical to which hydroxyl, halogen atom, amido group or the like is bonded; and oxyalkylene compound residue obtained by the addition reaction or active hydrogen containing compound selected from alcohols, phenols, carboxylic acids and amines, with an alkyleneoxide.

In this invention, as stated hereinbefore, hydrophobic resin powder or a resinous liquid of hydrophobic resin and organic solvent, the abovementioned hardener and the abovementioned compound (I) or (II) are uniformly dispersed in the abovementioned water-aqueous resin system in the form of fine particles or

droplets having an average diameter of 100μ or less. At that time, the desired dispersion may be obtained by mixing the abovementioned materials in a regular mixer for coating composition use. The temperature is usually maintained at 35~95°C. Thus, the desired dispersion can be obtained by the mixing as, for example, in a laboratory mixer at the abovementioned temperature for 15 minutes or so.

Incidentally, since the abovementioned compound (I) or (II) shows, in such mixed dispersion system, a good compatibility with a common coating-use aqueous resin and has an emulsifying activity and hence an activity of maintaining the fine particle resin in stabilized dispersion form in the system such compound may be advantageously added and compounded in the system. However, since the compound (I) or (II) is of reactive nature, it is not always necessarily to follow the abovementioned mixe-dispersion means. If desired, the abovementioned compound may be incorporated in the aqueous resin or hydrophobic resin powder itself beforehand and used in that form. In either case, the abovementioned compound may exert the function of preferred hardening catalyst.

That is, when the abovementioned compound (I) or (II) is adopted in the coating composition, at the time when the coated film is subjected to a bake-drying step, viscosity of the coating is only gradually increased at the initial stage of said baking, but suddenly and markedly increased at the later stage thereof. Furthermore, even when the use-amount of said compound (I) or (II) is increased, said viscosity increase is scarcely influenced at the initial stage of said baking. However, the viscosity increase at the later stage is surely accelerated. Therefore, it is possible to increase the amount ratio in the composition as compared with those of the conventional catalysts and effectively control the occurence of pinholes. Thus, the compounds (I) or (II) have been found to be quite useful, advantageous hardening catalysts.

Since the compound (I) or (II) possesses an ethylenic unsaturation group at the end portion of the molecule, it is possible to copolymerize with the hydrophobic resin beforehand. In the case of mixed system, said compound is, at the time of bake-drying, taken impartially in the coating and unifomly dispersed therein. When hydroxyl bearing compound like compound (VIII) is used, according to the preferable embodiment, said compound is reacted with, an aminoplast series hardener as, for example, melamine resin, and advantageously taken in a coating. In any way, the compound (I) or (II) is effectively taken in a coating and does not remain in the free state in the coating and hence excellent film properties can be expected.

Furthermore, this type of compound has, as already stated, a surface activity and hence is excellent in dispersibility and compatibility with other material.

Moreover, as a preferable embodiment, the side chain of the compound can be prolonged as compared with those of conventional catalysts, thereby attaining further improvement in compatibility with hydrophobic resin.

As a consequence, a thoroughly uniform dispersion can be obtained, the dispersion is hardly decomposed until water is evaporated, and curing starting time can be delayed as desired. Furthermore, since an increased amount of catalyst can be compounded in a coating composition, pinhole resistance and weather resistance can be more easily controlled.

In the abovementioned dispersion comprising resins, hardening agent and hardening catalyst, pigment, dyestuff, coating additives, plasticizer and the like may be dissolved or dispersed therein, as desired.

Thus obtained coating composition of this invention is excellent in dispersibility, hardening property, and working properties (and especially, pinhole resistance), and capable of resulting a baked coating with excellent coating appearance (especially gloss and smoothness), water resistance and weather resistance, and therefore, is very useful as intermediate and top coat compositions for automobile bodies, electric appliances and the like.

The coating method used is not of specific, and various methods including electrodeposition coating, flow coating, roll coating and the like may be advantageously used, as well as common atomizing coating.

The invention shall be now more fully explained in the following examples and however, the invention should not be limited to the same.

Unless otherwise being stated, all parts and % are by weight.

As compound, hardening agent, aqueous resin, hydrophobic resin powder and resinous liquid of hydrophobic resin and organic solvent, the following were used.

Compound

(a)

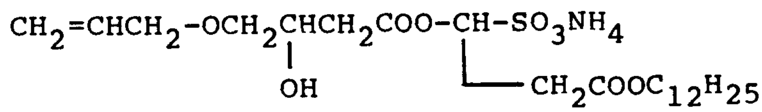

(b)

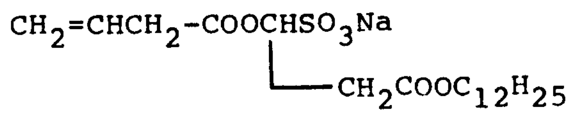

hardening agent

hexamethoxymethylol melamine
(Cymel 303, manufactured by Mitsui Cyanamid)
methyl-butyrated melamine
(Nikalack MX-40, manufactured by Sanwa Chemical K.K.)
methyl-butyrated melamine
(Nikalack MX-45, manufactured by Sanwa Chemical K.K.)

Aqueous resin varnish

(I) To 100 parts of a solution of acrylic resin having an acid value of 65, a hydroxyl value of 48 and a number average molecular weight of 3,900 in ethyl cellosolve (80% by weight solid content), were added 8.3 parts of dimethyl ethanolamine and 211.7 parts of water and the mixture was stirred well to obtain an aqueous resin varnish (I) having a neutralization rate of 80% and a solid content of 25% by weight.

(I-1) The abovementioned (I) was compounded with 2% of the solid of said (I) of the compound (b) to obtain an aqueous resin varnish (I-1).

(I-2) 7 parts of Kaya ester 0 (peroxide polymerization initiator, manufactured by Kayaku Nuri Co.) were added with 21.6 parts of Ethyl Cellosolve and to this, were dropwise and simultaneously added 100 parts of acrylic monomer mixture (styrene:2-ethylhexyl acrylate:2-hydroxyethyl acrylate:methylmethacrylate = 40:40:10:10) and 13.6 parts of a solution of compound (a) (water:Ethyl Cellosolve = 50:50, solid content 33% by weight) over 3 hours. After completion of said addition, the mixture was subjected to aging for 1 hour to obtain an aqueous resin varnish (I-2).

(II) To 100 parts of a solution of alkyd resin having an acid value of 35, a hydroxyl value of 80 and a number average molecular weight of 1,700 in Butyl Cellosolve (solid content 80% by weight), were added 5.8 parts of dimethyl ethanol amine and 220 parts of water and the mixture was treated in a laboratory mixer at a room temperature for 15 minutes to obtain an aqueous resin varnish (II) having a neutralization rate of 80% and a solid content of 25% by weight.

(II-1) To the abovementioned (II), was added 2% of the solid of said (II) of the compound (a) to obtain an aqueous resin varnish (II-1).

(II-2) To the abovementioned (II), was added 2% of the solid of said (II) of the compound (b) to obtain an aqueous resin varnish (II-2).

(III) An aqueous resin varnish (III) was prepared by using an acetic-acid-neutralized cationic resin, having a nitrogen atom equivalent (Note) of 1,040, a neutralization rate of 100%, a solid content of 25% by weight, and a molecular weight of 5,000.

(Note): nitrogen atom equivalent shall mean a number average molecular weight/nitrogen atom number per molecule.

(III-1) 7 parts of 2,2'-azobisisobutyronitrile as a polymerization initiator and 21.6 parts of Ethyl Cellosolve were mixed together and to this, at a temperature of 100 °C, were simultaneously and dropwise added 100 parts of acrylic monomer mixture (styrene:ethylacrylate:2-ethylhexyl acrylate:dimethyl aminoethyl methacrylate = 42:30:10:18) and 9 parts of a solution of compound (b)

(solid content 50% by weight) over 3 hours. After completion of said addition, the mixture was subjected to aging for 1 hour and then neutralized with 6.9 parts of acetic acid to obtain an aqueous resin varnish (III-1) having a neutralization rate of 100%, a solid content of 25% by weight and a number average molecular weight of 5,000.

Hydrophobic resin powder:

The epoxy resin powders ①, ② and carboxyl group bearing resin powders ③, ④ shown in the following Table 1 were used, and they were combined with the compounds (a), (b) each in the indicated amounts in Table 1. These materials were placed in a pre-mixe tank and stirred. Thereafter, they were put in a kneader and melt-kneaded at 95 °C. After cooling, the solid mass was pulverized in a grinder and the resultant was passed through a 150 mesh shieve to obtain powder of 100μ or less.
In this way, hydrophobic resin powders (A-1) and (B-1) were prepared, respectively.

Table 1

| materials | formulation | (A-1) | (B-1) |
|---|---|---|---|
| epoxy resin | ① Epicoat #1004 (manuf. by Mitsuitohatsu) Bisphenol type | 57 parts | |
| | ② Finedick A 217 (manuf. by Dainippon Ink K.K.) acrylic type | | 50 parts |
| carboxyl group bearing resin | ③ Finedick 6107 (manuf. by Dainippon Ink K.K.) Polyester type | 43 parts | |
| | ④ Almatick PD-1375 (manuf. by Mitsuitohatsu) acrylic type | | 50 parts |
| Compound | (a) | 2 parts | |
| | (b) | | 2 parts |

Hydrophobic resinous liquid

(C) An acrylic resin having a SP value of 9.35, a hydroxyl value of 40, Tg of 30 °C and a number average molecular weight of 4,000 was dissolved in Solvesso 150 (aromatic hydrocarbon solvent, manufactured by Esso Petroleum Co.) to obtain a resinous liquid (C) having a solid content of 80% and a SP value of 9.20.

(C-1) 10 parts of Kaya ester 0 were mixed with 21.6 parts of Solvesso 150 and to this, at a temperature of 125 °C, were simultaneously and dropwise added 100 parts of acrylic monomer mixture (styrene:2-hydroxyethyl acrylate:methyl methacrylate:2-ethylhexyl acrylate = 59.1:8.3:9.3:23.3) and 13.6 parts of a solution of compound (a) (water:Ethyl Cellosolve = 50:50, solid content 33% by weight) over 3 hours. After completion of said addition, the mixture was subjected to aging for 1 hour to obtain a hydrophobic resinous liquid (C-1).

(D) An acrylic resin having a SP value of 10.1, a hydroxyl value of 60, an acid value of 10, and a number average molecular weight of 1,700 was dissolved in xylene to have a varnish having a solid content of 85%. To 100 parts of thus obtained varnish, were mixed and dispersed 50 parts of butyrated melamine-formaldehyde resin to obtain a resinous liquid (D) with SP 10.0.

(D-1) The abovementioned (D) was added with 1% of the solid of said liquid (D) of the catalyst (b) to obtain a resinous liquid (D-1).

(E) 80 parts of the abovementioned aqueous resin varnish (III-1) were placed in a flask, 5 parts of azobis isobutyronitril as a polymerization initiator and 20 parts of water were added thereto. After heating to 80 °C, 20 parts of monomer mixture of styrene:ethylmethacrylate:2-hydroxyethyl methacrylate = 40:40:10 were slowly and dropwise added and copolymerized to obtain a dispersion (E) of resinous particles.

Example 1

(Preparation of pigment paste)

40 parts of the aqueous resin (II-1) and 40 parts of Typake R-930 (Titanium white, manufactured by Ishihara Sangyo Co.) were diluted with deionized water, subjected to pre-mixing, and then the combined was subjected to dispersion treatment by using a paint conditioner and glass medium, at a room temperature for 40 minutes to prepare a pigment paste.

(Preparation of resin particle paste)

20 parts the resin powder (A-1) and 60 parts of the aqueous resin (II-1) were diluted with deionized water to a viscosity (20 °C) of about 100 poises, and the mixture was subjected to a dispersion treatment in a laboratory mixer at 60 °C for 30 minutes to prepare a fine resin particle paste.

(Preparatin of coating composition)

80 parts of the abovementioned pigment paste, 80 parts of the resin particle paste and 15 parts of Nikalack MX-40 were mixed together and stirred at a room temerature to obtain a coating composition.

Examples 2~4

Following the procedures stated in Example 1 but using the materials and their compounding ratio shown in Table 2, pigment pastes and resin particle pastes were prepared. Thereafter, coating compositions were prepared as in Example 1.

Example 5

In this Example, the aforesaid hydrophobic resinous liquid (E) was used in place of a resin particle paste. Following the procedures of Example 1 but using the materials shown in Table 2 each in the indicated compounding ratio, a pigment paste was prepared. From these materials, a coating composition was prepared as in Example 1.
The coating compositions of Examples 1~5 each was diluted with deionized water to a Ford cup #4 viscosity of 30 seconds. Then, it was applied by a conventional spray coating method on a steel plate, subjected to setting for 5 minutes, and baked at 150 °C for 20 minutes to obtain a tridimensionallized coating.

Test results of pinhole resistance and weather resistance of the respective coating composition are shown in Table 2.

Table 2

| Example | | | 1 | 2 | 3 | 4 | 5 |
|---|---|---|---|---|---|---|---|
| resin particle paste | (a) resin fine powder or resin liquid particle | | A-1 | B-1 | C-1 | D-1 | E |
| | (b) aqueous resin | | II-1 | I-1 | I-2 | II-2 | |
| Pigment paste | (c) pigment | | Typake R-930 | Typake R-930 | Typake R-930 | Typake R-930 | Typake R-930 |
| | (d) aqueous resin | | II-1 | I-1 | I-2 | II-2 | III-1 |
| Compounding ratio (solid weight part) | | (a) | 20 (20) | 15 (15) | 18.75(15) | 17.65(15) | |
| | | (b) | 60 (15) | 60 (15) | 60 (15) | 60 (15) | 90 (30) |
| | | (c) | 40 (40) | 40 (40) | 40 (40) | 40 (40) | 40 (40) |
| | | (d) | 40 (10) | 40 (10) | 40 (10) | 40 (10) | 40 (10) |
| melamine | | | Nikalack MX-45 15 | Nikalack MX-45 20 | Cymel 303 20 | Nikalack MX-40 20 | Cymel 303 20 |
| Pinhole resistance max. film thickness (μ) | | | 90 | 80 | 50 | 60 | 50 |
| weather resistance gloss retention * | | | — | — | 95 | 90 | 90 |

* ... Gloss retention value after being illuminated for 2,000 hours in Sunshine Weather-O-Meter (manufactured by Suge Tester Co., indicated by (Post-illumination gloss/pre-illumination gloss) x 100

## Claims

1. A thermosetting type aqueous coating composition comprising
(A) water medium,
(B) an aqueous resin having a surface tension in 1 wt% deionized water solution of 51 dyne/cm or less and a water tolerance of 4 or more,
(C) a hydrophobic resin in powder form or in the form of liquid droplets,
(D) a hardening agent, and
(E) a compound represented by the formula (I)

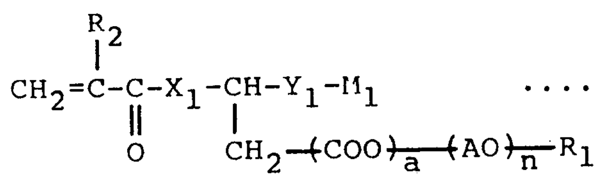
.....(I)

(wherein $R_1$ is a hydrocarbon group which may have a substituent, a phenyl group, an amino group or a carboxylic acid residue; $R_2$ is hydrogen atom or methyl group; A is an alkylene having 2~4 carbons; n is an integer of 0~100; $X_1$ is -CONH group or

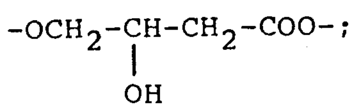

$Y_1$ is a carboxylic acid residue or a sulfonic acid residue; $M_1$ may form salt with $Y_1$ and is a monovalent or bivalent cation, ammonium ion or a lower amine; a is 0 or 1)
or the formula (II)

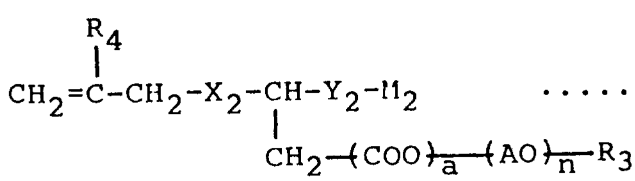
.....(II)

(wherein $R_3$ is a hydrocarbon group which may have a substituent, a phenyl group, an amino group or a carboxylic acid residue; $R_4$ is hydrogen atom or methyl group; A is an alkylene group having 2~4 carbons; n is an integer of 0~100; $X_2$ is -CONH group or -COO or

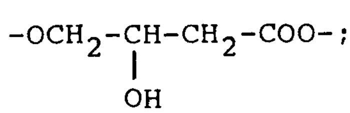

$Y_2$ is a carboxylic acid residue or a sulfonic acid residue; $M_2$ may form salt with $Y_2$ and is a monovalent or bivalent cation, ammonium ion or a lower amine; a is 0 or 1)
as a hardening catalyst,
the amount of said compound being 0.1~10% by weight of the total solid.

**2.** A coating composition according to claim 1 wherein the hydrophobic resin is made of acrylic resin, alkyd resin, polyester resin, epoxy resin, aminoplast resin, acryl-modified alkyd resin or acryl-modified polyester resin.

**3.** A coating composition according to claim 1 or 2 wherein the aqueous resin is the resin obtained by neutralizing an anionic resin having an acid value of 30~200 with a basic compound.

**4.** A coating composition according to claim 1 or 2 wherein the aqueous resin is the resin obtained by neutralizing a cationic resin having 30~300mmol nitrogen atom per 100g of resin solid with an acidic compound.

**Patentansprüche**

**1.** Wärmehärtende wäßrige Überzugszusammensetzung, enthaltend
(A) ein Wassermedium,
(B) ein wäßriges Harz mit einer Oberflächenspannung in 1 Gew.% entionisierter Wasserlösung von 51 dyn/cm or weniger und einer Wassertoleranz von 4 oder mehr,
(C) ein hydrophobes Harz in Pulverform oder in Form von Flüssigkeitströpfchen,
(D) ein Härtemittel und
(E) eine Verbindung der Formel (I)

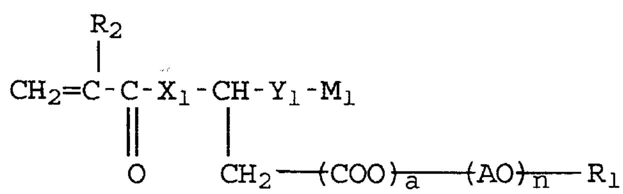

(I)

(worin $R_1$ eine Kohlenwasserstoffgruppe ist, die einen Substituenten, eine Phenylgruppe, eine Aminogruppe oder einen Carbonsäurerest haben kann; $R_2$ ein Wasserstoffatom oder eine Methylgruppe ist; A ein Alkylen mit 2~4 Kohlenstoffen ist; n eine ganze Zahl von 0~100 ist; $X_1$ eine -CONH-Gruppe oder

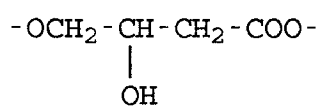

ist; $Y_1$ ein Carbonsäurerest oder ein Sulfonsäurerest ist; $M_1$ mit $Y_1$ ein Salz bilden kann und ein einwertiges oder doppelwertiges Kation, Ammoniumion oder ein niederes Amin ist; a 0 oder 1 ist) oder der Formel (II)

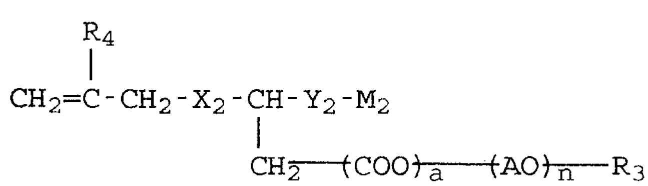

(II)

(worin $R_3$ eine Kohlenwasserstoffgruppe ist, die einen Substituenten, eine Phenylgruppe, eine Aminogruppe oder einen Carbonsäurerest haben kann; $R_4$ ein Wasserstoffatom oder eine Methylgruppe ist; A eine Alkylengruppe mit 2~4 Kohlenstoffen ist; n eine ganze Zahl von 0~100 ist; $X_2$ eine -CONH-Gruppe oder -COO oder

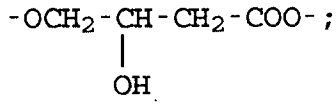

$Y_2$ ein Carbonsäurerest oder ein Sulfonsäurerest ist; $M_2$ mit $Y_2$ ein Salz bilden kann und ein einwertiges oder doppelwertiges Kation, Ammoniumion oder ein niederes Amin ist; a 0 oder 1 ist) als Härtekatalysator,
wobei die Menge dieser Verbindung 0,1~10 Gew.% des gesamten Feststoffes beträgt.

2. Überzugszusammensetzung nach Anspruch 1, in der das hydrophobe Harz aus Acrylharz, Alkydharz, Polyesterharz, Epoxyharz, Aminoplastharz, acryl-modifiziertem Alkydharz oder acryl-modifiziertem Polyesterharz hergestellt ist.

3. Überzugszusammensetzung nach Anspruch 1 oder 2, in der das wäßrige Harz das durch Neutralisierung eines anionischen Harzes mit einem Säuregrad von 30~200 mit einer basischen Verbindung erhaltene Harz ist.

4. Überzugszusammensetzung nach Anspruch 1 oder 2, in der das wäßrige Harz das durch Neutralisierung eines kationischen Harzes mit 30~300mmol Stickstoffatom per 100g Harzfeststoff mit einer säurehaltigen Verbindung erhaltene Harz ist.

**Revendications**

1. Formulation de revêtement aqueux du type thermodurcissable, comprenant:
   (A) une base d'eau,
   (B) une résine soluble dans l'eau, possédant dans une solution d'eau désionisée à 1 % en poids une tension superficielle de 51 dyne/cm ou moins, et une tolérance dans l'eau de 4 ou davantage,
   (C) une résine hydrophobe sous forme de poudre ou sous forme de gouttes de liquide,
   (D) un agent durcissant, et
   (E) un composé représenté par la formule (I)

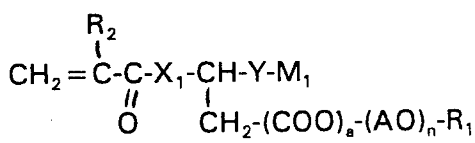

(dans laquelle $R_1$ est un groupe hydrocarbure qui peut posséder un substituant, un groupe phényle, un groupe amino ou un résidu d'acide carboxylique; $R_2$ étant un atome d'hydrogène ou un groupe méthyle; A étant un alkylène possédant 2-4 atomes de carbone, n étant un entier valant entre 0 et 100; $X_1$ étant un groupe - CONH ou un groupe

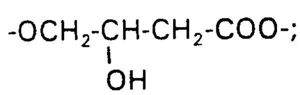

$Y_1$ étant un résidu d'acide carboxylique ou un résidu d'acide sulphonique; $M_1$ pouvant former un sel avec $Y_1$ et étant un cation monovalent ou bivalent, un ion ammonium ou une amine inférieure; a valant 0 ou 1; ou par la formule (II)

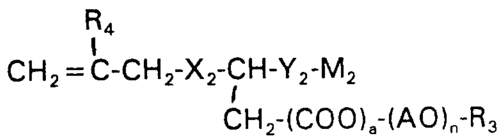

dans laquelle $R_3$ est un groupe hydrocarbure pouvant posséder un substituant, un groupe phényle, un groupe amino ou un résidu d'acide carboxylique; R4 étant un atome d'hydrogène ou un groupe méthyle; A étant un groupe alkylène possédant 2-4 atomes de carbone, n étant un entier valant entre 0 et 100; X2 étant un groupe -CONH ou -COO ou un groupe

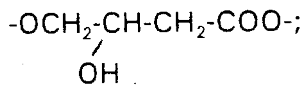

$Y_2$ étant un résidu d'acide carboxylique ou un résidu d'acide sulphonique; $M_2$ pouvant former un sel avec $Y_2$ et étant un cation monovalent ou bivalent, un ion ammonium ou une amine inférieure; a valant 0 ou 1,
servant de catalyseur de durcissement, la concentration en ledit composé étant de 0,1-10 % en poids de solide total.

2. Formulation de revêtement selon la revendication 1, dans laquelle la résine hydrophobe est faite d'une résine acrylique, d'une résine alkyde, d'une résine polyester, d'une résine époxy, d'une résine aminoplastique, d'une résine alkyde modifiée acryle ou d'une résine polyester modifiée acryle.

3. Formulation de revêtement selon la revendication 1 ou 2, dans laquelle la résine soluble dans l'eau est la résine obtenue par neutralisation par un composé basique d'une résine anionique possédant une valeur acide de 30-200.

4. Formulation de revêtement selon la revendication 1 ou 2, dans laquelle la résine aqueuse est la résine obtenue par neutralisation par un composé acide d'une résine cationique possédant 30-300 atome-gramme d'azote par 100 g de résine solide.